# EUROPÄISCHE PATENTSCHRIFT

(11) **EP 2 842 412 B1**
(45) Veröffentlichungstag und Bekanntmachung des Hinweises auf die Patenterteilung: **26.10.2016**
(21) Anmeldenummer: 14169219.4
(22) Anmeldetag: 21.05.2014
(51) Int. Cl.: A01F 29/02, A01F 29/06, A01D 34/13, A01D 34/52, A01D 34/73, B02C 18/18

(54) **Erntegutbearbeitungs- und/oder Förderelement für einen Feldhäcksler**
Crop processing and/or conveying element for a forage harvester
Élément de traitement de récoles et/ou de transport pour une ramasseuse-hacheuse

(30) Priorität: 21.06.2013 DE 102013211774
(43) Veröffentlichungstag der Anmeldung: 04.03.2015
(73) Patentinhaber: Deere & Company, Moline, IL 61265 (US)
(72) Erfinder: Bacon, Joshua D, 66894 Bechhofen (DE); McLawhorn, Patrick, 66482 Zweibrücken (DE)
(74) Vertreter: Holst, Sönke

(56) Entgegenhaltungen:
- DE-A1- 3 713 335
- DE-U1-202007 011 503
- US-A- 2 335 249
- US-B1- 6 857 255

## Beschreibung

Die Erfindung betrifft ein Erntegutbearbeitungs- und/oder Förderelement für einen Feldhäcksler, insbesondere ein Messer, ein Förderpaddel oder eine Förderleiste, mit einem Körper, der an einem in Drehung versetzbaren Träger anbringbar und mit einer im Betrieb in Berührung mit Erntegut kommenden Hartstoffschicht versehen ist, welche in einer Ausnehmung des Körpers angeordnet ist und mit einer sich tangential zur Drehrichtung des am Träger angebrachten Körpers erstreckenden Grenzfläche zwischen dem Körper und der Hartstoffschicht und einer sich radial zur Drehrichtung des Körpers erstreckenden Grenzfläche zwischen dem Körper und der Hartstoffschicht an der Ausnehmung anliegt.

### Stand der Technik

Feldhäcksler sind landwirtschaftliche Erntemaschinen, die Erntegut von einem Feld aufnehmen, häckseln und durch einen Auswurfkrümmer auf ein Transportfahrzeug überladen. Das Erntegut kann aus auf dem Feld stehenden Pflanzen, wie Mais oder Getreide, oder bereits geschnittenen, in einem Schwad zusammengeführten Pflanzen, insbesondere Gras, bestehen und wird in der Regel als Viehfutter oder zur Biogaserzeugung verwendet. Der Schnittvorgang erfolgt durch eine rotierende Häckseltrommel mit einer Anzahl um ihren Umfang verteilter Messer, die das Erntegut im Zusammenwirken mit einer Gegenschneide zerkleinern.

Die Messer sind im Betrieb einem erheblichen Verschleiß ausgesetzt, bedingt durch das Erntegut und darin enthaltene Verunreinigungen wie beispielsweise Sand. Ähnlichem Verschleiß sind auch Förderpaddel von Nachbeschleunigern und Förderleisten von Einzugswalzen ausgesetzt.

Zur Verlängerung der Standzeit der Messer werden diese im Stand der Technik mit Hartstoffbeschichtungen ausgestattet, die durch Härten, Schweißen oder andere Verbindungsverfahren auf der Fläche des Messers aufgebracht werden, welche die Schneidkante bildet (vgl. GB 1 332 013 A, EP 2 329 705 A1). Die Befestigung der Hartstoffschicht am Körper des Messers beruht demnach lediglich auf einem Stoffschluss, der bei hohen Belastungen nicht immer hinreicht, die Hartstoffschicht hinreichend fest am Körper zu halten. Es kommt somit gelegentlich zu mehr oder weniger großen Abbrüchen der Hartstoffbeschichtung, was die Standzeit der Messer verkürzt.

Weiterhin wurde vorgeschlagen, bei einem Messer für einen Strohhäcksler eines Mähdreschers ein Schneidelement zwischen zwei Schneidenträgern einzubetten (EP 1 935 231 A1) oder eine entsprechende Anordnung an einem Messer für einen Rasenmäher vorzusehen (US 3 975 891 A). Derartige Messer sind für Feldhäcksler nicht geeignet, denn die Schneidkante des Messers muss im engen Abstand an einer Gegenschneide vorbeigeführt werden, was bei einem zwischen Schneidenträgern angeordneten Schneidelement nicht möglich ist. Ähnliches gilt für die erwähnten Förderpaddel von Nachbeschleunigern und Förderleisten von Einzugswalzen, denn sie fördern das Erntegut mit ihren vorlaufenden Flächen, was mit zwischen Trägern eingebetteten Elementen nicht möglich ist.

Außerdem sind Gegenschneiden für Feldhäcksler mit ausgefasten Ecken beschrieben worden, in denen Hartstoffeinsätze aus Werkzeugstahl durch Bogenschweißen befestigt werden (vgl. den in der EP 1 264 535 A1 erwähnten Stand der Technik). Es wurde auch vorgeschlagen, in den Körper der Gegenschneide eine axiale Vertiefung einzubringen, in welche eine Halterung eingeschraubt wird, die wiederum eine axiale Nut aufweist, in welche die Gegenscheidkante bildende, verschleißresistente Einsätze aus gesintertem Hartmetall eingesetzt werden (EP 0 761 089 A1). Die Hartstoffeinsätze sind keilförmig mit von der Gegenscheidkante beabstandeten, dickeren Enden und werden durch die Schrauben und die Halterung am Körper der Gegenscheide fixiert. Die Gegenschneiden sind stationär am Rahmen des Feldhäckslers befestigt und wesentlich dicker als Messer, Förderpaddel oder Förderleisten, sodass eine einfache Übertragung dieser Anordnung auf letztere nicht möglich erscheint.

Gemäß der US 6 857 255 B1 und DE 37 13 335 A1 wird die Hartstoffschicht wird durch thermische Behandlung des Materials des Messers hergestellt. Die sich ergebenden Übergänge zwischen der Hartstoffschicht und dem eigentlichen Material des Messers erstrecken sich tangential zur Drehrichtung (d.h. radial gegenüber der Drehachse) und senkrecht dazu (d.h. radial zur Drehrichtung und tangential zur Bewegungsrichtung des Messers) mit rechteckigen (US 6 857 255 B1) oder abgerundeten Ecken (DE 37 13 335 A1). Eine derartige Form des Messers mit in einer Aussparung des Messerträgers mit rechteckigem Querschnitt eingepassten Hartstoffschicht aus einem Keramikmaterial findet sich auch in DE 20 2007 011 503 U1. Die US 2 335 249 A zeigt ein Messer, bei dem die Hartstoffschicht durch Fusionsablagerung in einer Aussparung des Messers angeordnet ist, deren der Schneidkante beabstandeter Übergang einen stumpfen Winkel mit dem anderen Übergang einschließt. Bei den in diesem Absatz aufgeführten Messern ist die Hartstoffschicht zwar formschlüssig in das Material des Messers eingefügt, jedoch überträgt der Formschluss die Schneidkräfte nicht in das Material des Messers.

### Aufgabe

Das der Erfindung zu Grunde liegende Problem wird darin gesehen, ein im Betrieb bewegliches Erntegutbearbeitungs- und/oder Förderelement für einen Feldhäcksler bereitzustellen, welche die erwähnten Nachteile nicht oder in einem verminderten Maße aufweist.

### Lösung

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein Erntegutbearbeitungs- und/oder Förderelement für einen Feldhäcksler, insbesondere ein Messer, ein Förderpaddel oder eine Förderleiste, umfasst einen Körper, der an einem in Drehung versetzbaren Träger anbringbar und mit einer im Betrieb in Berührung mit Erntegut kommenden Hartstoffschicht versehen ist. Die Hartstoffschicht ist formschlüssig mit dem Körper verbunden. Die Hartstoffschicht ist in einer Ausnehmung des Körpers angeordnet. Die Wand und/oder der Boden der Ausnehmung übertragen bei dieser Ausführungsform die Kräfte von der Hartstoffschicht auf den Körper. Eine sich zumindest etwa radial zur Drehrichtung des Körpers erstreckende Grenzfläche zwischen dem Körper und der Hartstoffschicht schließt einen spitzen Winkel mit einer sich zumindest etwa tangential zur Drehrichtung des Körpers erstreckenden Grenzfläche ein. Es wird somit zwischen der tangentialen und der radialen Grenzfläche ein spitzer Winkel gebildet, in welchen die beim Bearbeiten oder Fördern des Ernteguts wirkenden Kräfte die Hartstoffschicht hinein drücken. Die Hartstoffschicht wird somit sicher am Körper fixiert.

Somit ist die Festigkeit der Hartstoffschicht verbessert und die Standzeit des Erntegutbearbeitungs- und/oder Förderelements verlängert.

Die Hartstoffschicht liegt vorzugsweise mit genau zwei Grenzflächen an der Ausnehmung an, während die diesen Grenzflächen jeweils gegenüber liegenden Flächen in der Regel nicht an der Ausnehmung anliegen.

Eine Grenzfläche zwischen dem Körper und der Hartstoffschicht kann über ihre ganze Länge oder einen Teil davon geradlinig oder profiliert, insbesondere wellenförmig oder zinnenförmig oder sägezahnförmig oder schwalbenschwanzförmig geformt sein. Durch diese Profilierung wird alternativ oder zusätzlich zu der oben erwähnten Ausnehmung der Formschluss zwischen der Hartstoffschicht und dem Körper hergestellt. Die erwähnte Grenzfläche kann sich zumindest näherungsweise tangential zur Drehrichtung des Körpers erstrecken, und/oder sie erstreckt sich zumindest näherungsweise radial zur Drehrichtung des Körpers. Die Ausrichtung der erwähnten Grenzfläche muss nicht exakt tangential oder radial sein, sondern kann auch um einen Winkel von der Tangente bzw. Radialen zur Drehrichtung des Körpers abweichen. Die Profilierung kann in Drehrichtung (d.h. in einer radialen Ebene liegend, z.B. in tangentialer bzw. radialer Richtung) oder quer dazu (d.h. axial) oder (unter einem beliebigen Winkel, der somit nicht genau 45° mit der Drehrichtung bzw. der Tangente oder Radialen einschließen muss) diagonal ausgerichtet sein.

Die Hartstoffschicht kann aus mehreren Schichten aufgebaut sein. Sie kann durch Schmieden, Gießen, Sintern oder Kleben mit dem Körper verbunden werden. Außerdem kann die Hartstoffschicht quer zur Drehrichtung aus mehreren Abschnitten aufgebaut sein, die untereinander endseitig verrastet sind.

### Ausführungsbeispiele

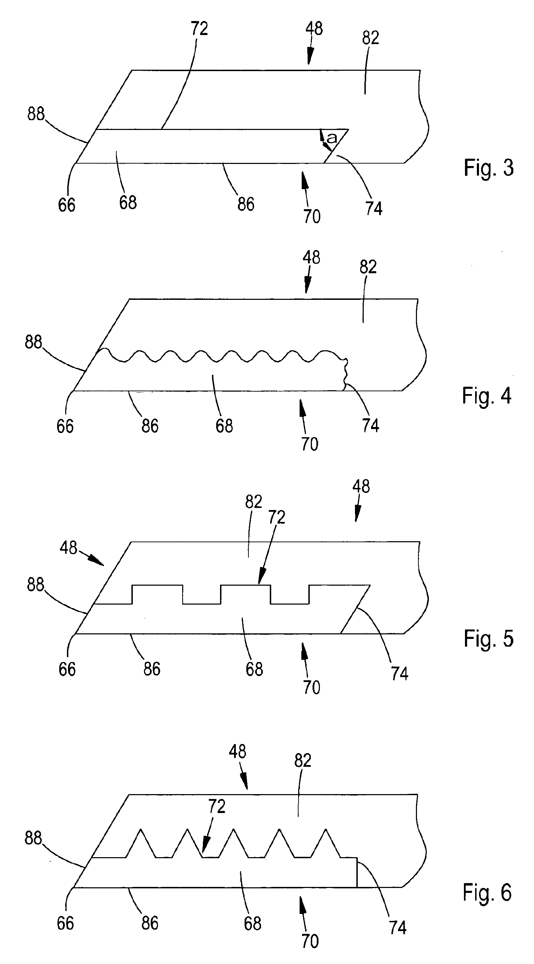

In den Zeichnungen sind nachfolgend näher beschriebene Ausführungsbeispiele der Erfindung dargestellt, wobei die Ausführungsformen nach Figur 4 und 6 nicht unter die Ansprüche fallen. Es zeigt:
- Fig. 1: einen Feldhäcksler in Seitenansicht und in schematischer Darstellung,
- Fig. 2: einen ausschnittsweisen vertikalen Schnitt durch die Häckseltrommel und die Befestigung der Messer daran,
- Fig. 3: einen vergrößerten Ausschnitt aus Figur 2, in welchem die Hartstoffschicht und die passende Ausnehmung im Körper des Messers dargestellt sind,
- Fig. 4: einen Querschnitt durch eine zweite Ausführungsform eines Messers,
- Fig. 5: einen Querschnitt durch eine dritte Ausführungsform eines Messers,
- Fig. 6: einen Querschnitt durch eine vierte Ausführungsform eines Messers,
- Fig. 7: einen Querschnitt durch eine fünfte Ausführungsform eines Messers,
- Fig. 8: einen frontseitigen Querschnitt durch eine sechste Ausführungsform eines Messers,
- Fig. 9: einen Querschnitt durch eine siebte Ausführungsform eines Messers,
- Fig. 10: einen Querschnitt durch eine achte Ausführungsform eines Messers,
- Fig. 11: eine Draufsicht auf das Messer der Figur 10,
- Fig. 12: einen Querschnitt durch eine erste Ausführungsform eines Paddels eines Nachbeschleunigers, und
- Fig. 13: einen Querschnitt durch eine zweite Ausführungsform eines Paddels eines Nachbeschleunigers.

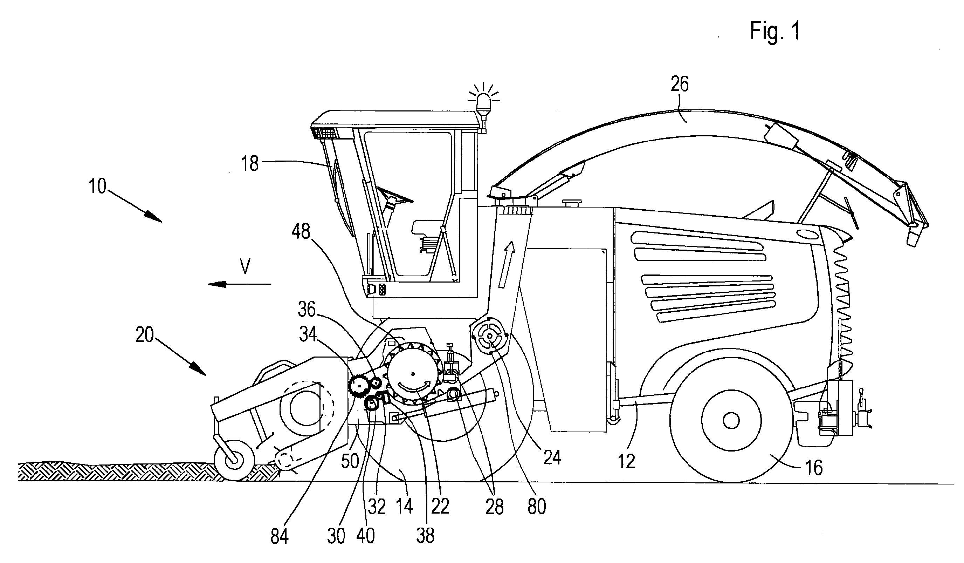

Ein in der Figur 1 gezeigter selbstfahrender Feldhäcksler 10 baut sich auf einem Rahmen 12 auf, der von vorderen und rückwärtigen Rädern 14 und 16 getragen wird. Die Bedienung des Feldhäckslers 10 erfolgt von einer Fahrerkabine 18 aus, von der aus eine Erntegutaufnahmevorrichtung 20 in Form einer Pick-up einsehbar ist. Mittels der Erntegutaufnahmevorrichtung 20 vom Boden aufgenommenes Gut, z. B. Gras oder dergleichen, wird einem Häckselaggregat zugeführt, das hier aus einer mit Messern 48 besetzten Häckseltrommel 22 aufgebaut ist, die es im Zusammenwirken mit einer Gegenschneide 38 in kleine Stücke häckselt und es einem Nachbeschleuniger 24 aufgibt. Bei anderen Feldhäckslern, insbesondere angebauten oder gezogenen Feldhäckslern, könnte das Häckselaggregat anstelle einer Häckseltrommel 22 auch aus einem Scheibenradhäcksler bestehen. Das Gut verlässt die Erntemaschine 10 zu einem nebenher fahrenden Anhänger über einen höhenverstellbaren und um die Hochachse drehbaren Austragschacht 26. Zwischen der Häckseltrommel 22 und dem Nachbeschleuniger 24 befindet sich eine Nachzerkleinerungsvorrichtung 28, durch die das zu fördernde Gut der Fördervorrichtung 24 tangential zugeführt wird.

Zwischen der Erntegutaufnahmevorrichtung 20 und der Häckseltrommel 22 wird das Gut durch einen Einzugsförderer mit unteren Einzugswalzen 30, 32 und oberen Einzugswalzen 34, 36 transportiert, die innerhalb eines Einzugsgehäuses 50 angebracht sind. Die Einzugswalzen 30 bis 36 werden auch als Einzugswalzen bezeichnet, da die oberen Einzugswalzen 34, 36 durch Hydraulik- und/oder Federkraft gegen die unteren Einzugswalzen 30, 32 vorgespannt sind, damit das Erntegut zwischen den Einzugswalzen 30 bis 36 vorverdichtet wird und besser geschnitten werden kann. Im Folgenden beziehen sich Richtungsangaben, wie hinten und vom, auf die Vorwärtsrichtung V des Feldhäckslers 10, die in der Figur 1 von rechts nach links verläuft.

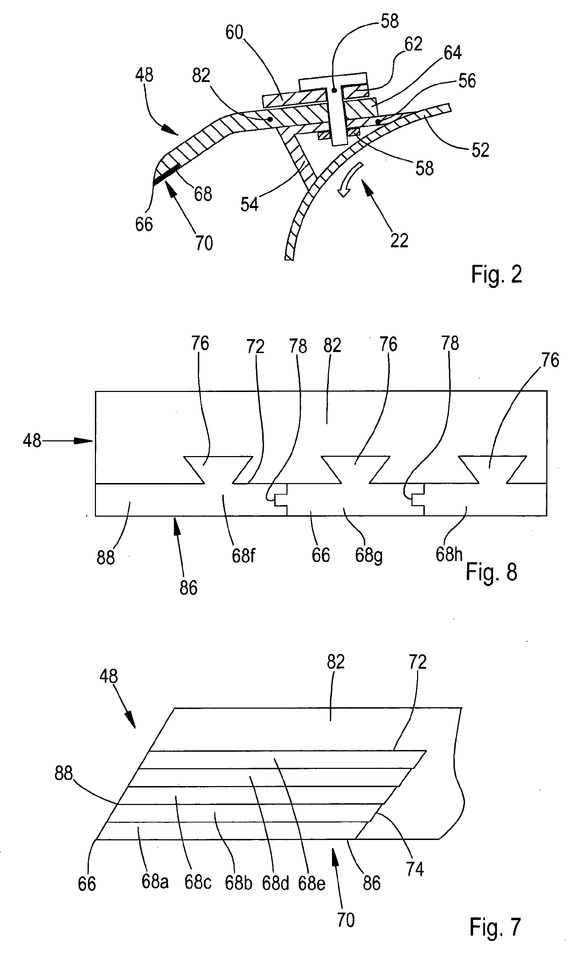

Die Figur 2 zeigt einen Ausschnitt der Häckseltrommel 22 mit dem daran befestigten Messer 48. Die Häckseltrommel 22 umfasst einen zylindrischen Mantel 52, um dessen Umfang und in dessen Achsrichtung eine Anzahl an winkelförmigen Trägern 54 angeschweißt sind. In der in Figur 2 oben eingezeichneten, nachlaufenden Wand 56 des Trägers 54 sind drei in axialer Richtung nebeneinander angeordnete Bohrungen angebracht, durch die sich jeweils eine Schraube 58 erstreckt, die an der Unterseite der Wand 56 mit einer Gewindeleiste 58 verschraubt ist. Die Schraube 58 erstreckt sich auch durch eine Bohrung 62 in einer Klemmleiste 60 und ein sich quer zur Schneidkante 66 erstreckendes Langloch 64 im Körper 82 des Messers 48. Zwischen der Klemmleiste 60 und dem Kopf der Schraube 58 kann noch eine Unterlegscheibe (nicht gezeigt) angeordnet sein. Das Messer 48 kann auch an beliebigen anderen Arten von Häckseltrommeln verwendet werden, z.B. mit sich radial erstreckenden Stützscheiben, an denen die Messer 48 befestigt werden (z.B. EP 0 789 994 A1) oder mit wendelförmigen Schneidkanten oder einen nicht-zylindrischen Hüllkreis beschreibenden Hüllkurven (DE 10 2012 201 334 A1).

Das Messer 48 ist an seiner Innenseite mit einer Hartstoffschicht 68 versehen, die innerhalb einer korrespondierenden Ausnehmung 70 des Körpers 82 des Messers 48 angeordnet ist. Die Figur 3 zeigt den betreffenden Abschnitt des Körpers 82 in vergrößerter Darstellung. Die Aussparung 70 und die Hartstoffschicht 68 sind durch eine erste, geradlinige Grenzfläche 72, die näherungsweise in tangentialer Richtung (d.h. Umfangsrichtung des von der Schneidkante 66 bei der Drehung der Häckseltrommel 22 beschriebenen Hüllkreises) orientiert ist, und eine zweite, kürzere und geradlinige Grenzfläche 74, die näherungsweise in radialer Richtung bezüglich der Drehachse der Häckseltrommel 22 orientiert ist, getrennt. Bei einer anderen Ausführungsform können die Grenzflächen 72, 74 auch kurvenförmig (konvex oder konkav) und/oder mit einem Radius miteinander verbunden sein. Die übrigen Flächen der quaderförmigen, relativ flachen Hartstoffschicht 68, d.h. die beiden der Schneidkante 66 benachbarten Flächen 86, 88 liegen hingegen nicht in der Aussparung 70, sondern stehen frei, da anderenfalls kein Schneiden des Ernteguts im Zusammenwirken mit der Gegenschneide 38 möglich wäre. Die darüber hinaus noch verbleibenden zwei Flächen der Hartstoffschicht 68, bei denen es sich um die bezüglich der axialen Richtung der Häckseltrommel 22 axialen Endflächen handelt, können ebenfalls frei stehen oder an seitlichen Rändern (nicht gezeigt) der Aussparung 70 anliegen.

Die Hartstoffschicht 68 liegt an beiden Grenzflächen 72, 74 direkt an der Ausnehmung 70 (spaltfrei) an. Der Winkel α zwischen den beiden Grenzflächen ist spitz (kleiner als 90°), sodass sich eine spitze Ecke bildet, in welche die Hartstoffschicht 68 durch die beim Schneiden entstehenden, etwa in Richtung der ersten Grenzfläche 72 verlaufenden Kräfte gedrückt wird. Die Hartstoffschicht 68 ist demnach formschlüssig in die Ausnehmung 70 eingepasst und die beim Schneiden entstehenden Kräfte werden durch den Formschluss von der Hartstoffschicht 68 in den Körper 82 übergeleitet. Dadurch ist ein Ablösen der Hartstoffschicht 68 vom Körper 82 kaum noch zu befürchten.

Bei der Ausführungsform nach Figur 4 sind die Grenzflächen 72 und 74 wellenförmig, während die erste, tangentiale Grenzfläche 72 bei der Ausführungsform nach Figur 5 zinnenförmig gestaltet und bei der Ausführungsform nach Figur 6 mit Nuten dreieckigen Querschnitts oder einem Sägezahnprofil versehen ist, die sich in den Körper 82 hinein erstrecken. Nach den Figuren 5 und 6 sind die zweiten Grenzflächen 74 jeweils geradlinig, sie können jedoch ebenfalls kurvenförmig, zinnenförmig, sinusförmig oder sägezahnförmig sein oder eine beliebige andere, profilierte Form aufweisen. Durch die sich bezüglich der Drehachse der Häckseltrommel 22 in axialer Richtung erstreckenden Profilierungen der ersten, tangentialen Grenzflächen 72 der Ausführungsformen nach den Figuren 4 bis 6 werden die beim Schneiden entstehenden Kräfte nicht nur an der zweiten, radialen Grenzfläche 74, sondern auch an der ersten, tangentialen Grenzfläche 72 auf den Körper 82 des Messers 48 übertragen.

Bei der Ausführungsform nach Figur 7 besteht die Hartstoffschicht 68 aus mehreren, getrennten Hartstoffschichten 68a bis 68e, die übereinander angeordnet sind. Die Hartstoffschichten 68a bis 68e können gleiche oder unterschiedliche Verschleißeigenschaften aufweisen, um die Abnutzungseigenschaften des Messers 48 an den verschleißenden Bereichen an der Schneidkante 66 und an der Fläche 88 zu vergleichmäßigen. Damit kann die Schleiffrequenz vermindert oder ganz auf ein Schleifen verzichtet werden. Anders als in der Figur 7 gezeigt, können die einzelnen Schichten 68a bis 68e untereinander durch profilierte Grenzflächen 72 verbunden sein, insbesondere wie in den Figuren 4 bis 6 und 8 gezeigt. Eine oder mehrere Hartstoffschichten (nicht gezeigt) mit denselben oder unterschiedlichen Verschleißeigenschaften gegenüber den Hartstoffschichten 68a bis 68e können auch an der Ober- und/oder Frontseite des Körpers 82 angebracht werden, was auch bei den anderen dargestellten Ausführungsformen möglich wäre.

Bei der Ausführungsform nach Figur 8, die das Messer 48 (anders als die Figuren 1 bis 7, die seitliche Ansichten zeigen) in einer Frontansicht zeigt, sind drei Hartstoffschichten 68f, 68g, 68h seitlich nebeneinander angeordnet. Es ist auch vorstellbar zwei oder mehr als drei Hartstoffschichten nebeneinander anzuordnen. An ihren benachbarten Enden sind die Hartstoffschichten durch passende Merkmale 78 in Form von Nuten und überstehenden Bereichen aneinander verrastet. Außerdem sind bei der Ausführungsform nach Figur 8 sich in tangentialer Richtung erstreckende, schwalbenschwanzförmige Nuten 76 im Körper 82 vorgesehen, in welche sich die Hartstoffschichten 68g bis 68h hinein erstrecken. Der Formschluss kann auch hierdurch eine Kurven-, Zinnen-, Sinus- oder Sägezahnform oder eine beliebige andere, profilierte Form der Nuten 76 erzielt werden. Derartige, schwalbenschwanzförmige Nuten 76 könnten auch in axialer Richtung verlaufen und bei den Ausführungsformen nach Figur 4 bis 6 verwendet werden. Diese Schwalbenschwanzform sichert die Hartstoffschicht 68 auch gegenüber in Figur 8 nach unten verlaufenden Kräften und sorgt für besondere Stabilität der Hartstoffschicht 68.

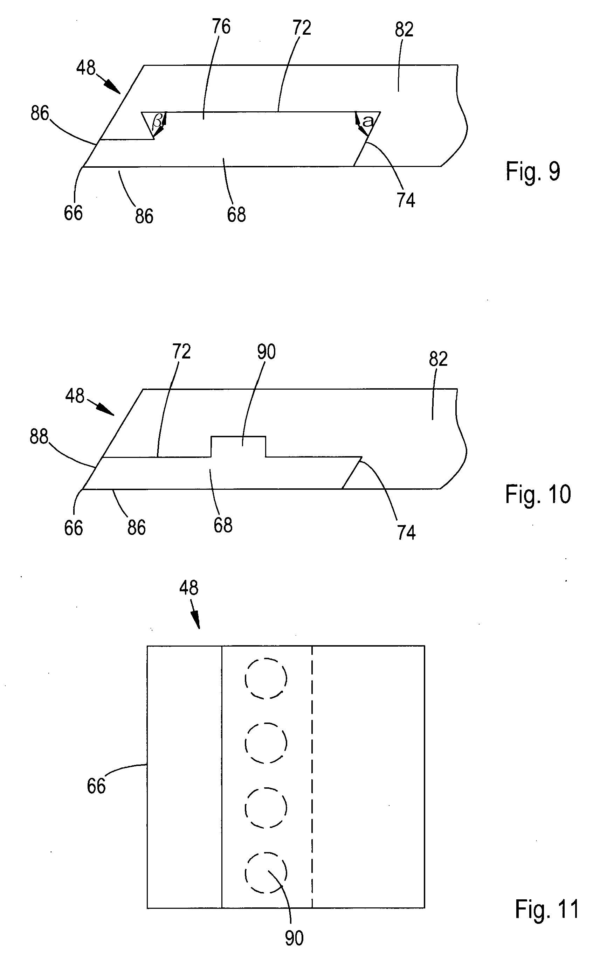

Bei der Ausführungsform nach Figur 9 ist eine schwalbenschwanzförmige Nut 76 im Körper 82 vorgesehen, in welche sich die Hartstoffschicht 68 erstreckt. Der Formschluss kann alternativ auch hier durch Kurvenform, Zinnenform, Sinusform, Sägezahnform oder eine andere profilierte Form der Nut 76 erzeugt werden. Eine derartige Ausführung nimmt die entgegen der Schneidrichtung auftretenden Kräfte, beispielsweise die teilweise beim Schleifprozess auftretenden Kräfte, auf und sorgt für besondere Stabilität der Hartstoffschicht. Der Winkel β ist hier ebenfalls vorzugsweise spitz (kleiner als 90°), er kann jedoch auch stumpf sein (größer als 90°), insbesondere wenn an anderer Stelle der Grenzfläche 72 ein Formschluss erzeugt wird.

Bei der Ausführungsform nach den Figuren 10 und 11 sind anstelle von Nuten zylindrische Löcher 90 im Körper 82 vorgesehen, in welche sich die Hartstoffschicht 68 noppenartig hinein erstreckt. Alternativ kann auch der Körper 82 sowie die Hartstoffschicht 68 (nicht gezeigt) mit einer Bohrung versehen sein, durch die der Körper 82 und die Hartstoffschicht 68 mit einem Stift oder mehreren Stiften abgesteckt und fixiert wird, um die Hartstoffschicht zusätzlich zu sichern. Der Stift kann in die Hartstoffschicht 68 eindringen oder sie durchdringen. Die Umfangsfläche der Löcher 90 und Noppen und die der Stifte können sowohl rund, aber auch elliptisch, wellenförmig, sägezahnförmig, stufenförmig oder anders profiliert sein.

Die Hartstoffschicht 68 wird vorzugsweise durch Schmieden, Gießen oder Kleben mit dem Körper 82 verbunden, obwohl auch beliebige andere Verfahren zur Anbringung denkbar sind, wie Schweißen oder Löten.

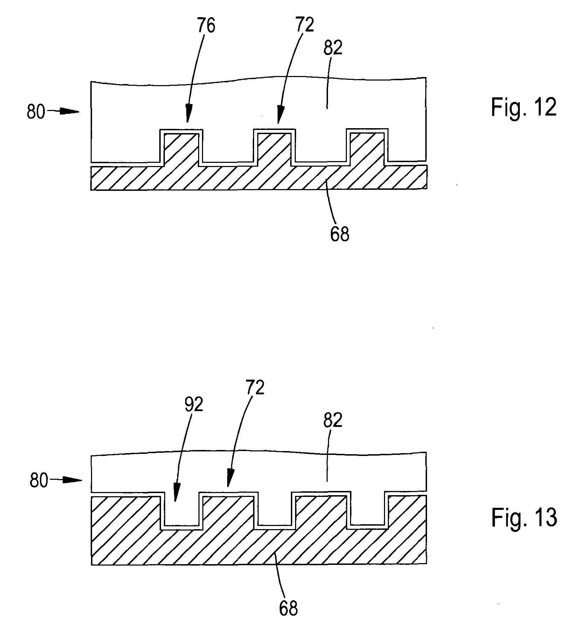

Die beschriebenen, in einer Ausnehmung 70 des Körpers 82 angeordneten Hartstoffschichten 68 können nicht nur an den Messern 48 der Häckseltrommel 22 Verwendung finden, sondern auch den mit dem Erntegut zusammenwirkenden, vorlaufenden Flächen von Paddeln 80 des Nachbeschleunigers 24 oder von Förderleisten 84 der Einzugswalzen 30 bis 34. Insbesondere bei Paddeln 80 des Nachbeschleunigers 24 oder von Förderleisten 84 der Einzugswalzen 30 bis 34, aber auch bei den Messern 48 könnten sich die Hartstoffschichten 68 über die gesamte vorlaufende Fläche oder einen Teil davon erstrecken, der jedoch nicht unbedingt mit einer Aussparung 70 zur Aufnahme der Hartstoffschicht 68 versehen sein muss. Dann erfolgt die Fixierung der Hartstoffschicht 68 am Körper 82 nur an der verbleibenden Grenzfläche 72 zwischen der Hartstoffschicht 68 und dem Körper 82 durch eine dort vorgesehene Profilierung beispielsweise mit in axialer, radialer und/oder diagonaler Richtung orientierten Nuten 76 (wie in der Figur 12 gezeigt) oder Erhebungen 92 (wie in der Figur 13 gezeigt), welche jeweils den erfindungsgemäßen Formschluss herstellen.

## Patentansprüche

1. Erntegutbearbeitungs- und/oder Förderelement für einen Feldhäcksler (10), insbesondere Messer (48), Förderpaddel (80) oder Förderleiste (84), mit einem Körper (82), der an einem in Drehung versetzbaren Träger (54) anbringbar und formschlüssig mit einer im Betrieb in Berührung mit Erntegut kommenden Hartstoffschicht (68) verbunden ist, welche in einer Ausnehmung (70) des Körpers (82) angeordnet ist und mit einer sich tangential zur Drehrichtung des am Träger (54) angebrachten Körpers (82) erstreckenden Grenzfläche (72) zwischen dem Körper (82) und der Hartstoffschicht (68) und einer sich radial zur Drehrichtung des Körpers (82) erstreckenden Grenzfläche (74) zwischen dem Körper (82) und der Hartstoffschicht (68) an der Ausnehmung (70) anliegt, **dadurch gekennzeichnet, dass** die sich radial zur Drehrichtung des Körpers (82) erstreckende Grenzfläche (74) einen spitzen Winkel (α) mit der sich tangential zur Drehrichtung des Körpers (82) erstreckenden Grenzfläche (72) einschließt.

2. Erntegutbearbeitungs- und/oder Förderelement nach Anspruch 1, wobei die Hartstoffschicht (68) quaderförmig und flach ist und eine Schneidkante (66) aufweist und die der Schneidkante (66) benachbarten Flächen (86, 88) der Hartstoffschicht (68) nicht an der Ausnehmung anliegen.

3. Erntegutbearbeitungs- und/oder Förderelement nach einem der Ansprüche 1 oder 2, wobei eine Grenzfläche (72, 74) zwischen dem Körper (82) und der Hartstoffschicht (68) über ihre ganze Länge oder einen Teil davon geradlinig oder profiliert, insbesondere wellenförmig oder zinnenförmig oder sägezahnförmig oder schwalbenschwanzförmig geformt ist.

4. Erntegutbearbeitungs- und/oder Förderelement nach Anspruch 3, wobei die Grenzfläche (72, 74) sich zumindest näherungsweise radial zur Drehrichtung des Körpers (82) und/oder zumindest näherungsweise tangential zur Drehrichtung des Körpers (82) erstreckt.

5. Erntegutbearbeitungs- und/oder Förderelement nach Anspruch 3 oder 4, wobei die Richtung der Profilierung in Drehrichtung oder axial oder diagonal ausgerichtet ist.

6. Erntegutbearbeitungs- und/oder Förderelement nach einem der Ansprüche 1 bis 5, wobei die Hartstoffschicht (68) aus mehreren Schichten (68a bis 68e) mit gleichen oder unterschiedlichen Eigenschaften aufgebaut ist.

7. Erntegutbearbeitungs- und/oder Förderelement nach einem der Ansprüche 1 bis 6, wobei die Hartstoffschicht (68) durch Schmieden, Gießen, Sintern oder Kleben mit dem Körper (82) verbunden ist.

8. Erntegutbearbeitungs- und/oder Förderelement nach einem der Ansprüche 1 bis 7, wobei die Hartstoffschicht (68) quer zur Drehrichtung aus mehreren Abschnitten (68f bis 68h) aufgebaut ist, die untereinander endseitig verrastet sind.

9. Feldhäcksler (10) mit einem Erntegutbearbeitungs- und/oder Förderelement nach einem der vorhergehenden Ansprüche.

## Claims

1. Crop processing and/or conveying element for a forage harvester (2), in particular knife (48), conveying paddle (80) or conveying strip (84), with a body (82) which is attachable to a carrier (54), which can be set into rotation, and is connected in a form-fitting manner to a hard material layer (68) which comes into contact with crop during operation, is arranged in a recess (70) of the body (82) and, with a boundary surface (72) between the body (82) and the hard material layer (68), the boundary surface extending tangentially to the direction of rotation of the body (82) attached to the carrier (54), and with a boundary surface (74) between the body (82) and the hard material layer (68), the boundary surface extending radially to the direction of rotation of the body (82), lies against the recess (70), **characterized in that** the boundary surface (74) extending radially to the direction of rotation of the body (82) encloses an acute angle (α) with the boundary surface (72) extending tangentially to the direction of rotation of the body (82).

2. Crop processing and/or conveying element according to Claim 1, wherein the hard material layer (68) is rectangular and flat and has a cutting edge (66), and those surfaces (86, 88) of the hard material layer (68) that are adjacent to the cutting edge (66) do not lie against the recess.

3. Crop processing and/or conveying element according to either of Claims 1 and 2, wherein a boundary surface (72, 74) between the body (82) and the hard material layer (68) is rectilinear or profiled over its entire length or a part thereof, in particular is shaped in an undulating or crenellated or serrated or dovetailed manner.

4. Crop processing and/or conveying element according to Claim 3, wherein the boundary surface (72, 74) extends at least approximately radially to the direction of rotation of the body (82) and/or at least approximately tangentially to the direction of rotation of the body (82).

5. Crop processing and/or conveying element according to Claims 3 or 4, wherein the direction of the profiling is oriented in the direction of rotation or axially or diagonally.

6. Crop processing and/or conveying element according to one of Claim 1 to 5, wherein the hard material layer (68) is constructed from a plurality of layers (68a to 68e) having identical or different properties.

7. Crop processing and/or conveying element according to one of Claims 1 to 6, wherein the hard material layer (68) is connected to the body (82) by forging, casting, sintering or adhesive bonding.

8. Crop processing and/or conveying element according to one of Claims 1 to 7, wherein the hard material layer (68) is constructed transversely to the direction of rotation from a plurality of portions (68f to 68h) which are latched to one another on the end sides.

9. Forage harvester (10) with a crop processing and/or conveying element according to one of the preceding claims.

## Revendications

1. Élément de traitement de récoltes et/ou de transport pour une ramasseuse-hacheuse (10), notamment couteau (48), pale de transport (80) ou baguette de transport (84), avec un corps (82) pouvant être attaché à un support (54) pouvant être placé en rotation et relié par complémentarité de formes à une couche de matière dure (68) entrant en contact en fonctionnement avec des récoltes, ladite couche étant disposée dans un évidement (70) du corps (82) et reposant contre l'évidement (70) avec une surface de délimitation (72) s'étendant tangentiellement par rapport à la direction de rotation du corps (82) placé au niveau du support (54) entre le corps (82) et la couche de matière dure (68) et avec une surface de délimitation (74) s'étendant radialement par rapport à la direction de rotation du corps (82) entre le corps (82) et la couche de matière dure (68), **caractérisé en ce que** la surface de délimitation (74) s'étendant radialement par rapport à la direction de rotation du corps (82) inclut un angle aigu (α) avec la surface de délimitation (72) s'étendant tangentiellement par rapport à la direction de rotation du corps (82).

2. Élément de traitement de récoltes et/ou de transport selon la revendication 1, la couche de matière dure (68) étant plate et en forme de parallélépipède rectangle et comportant une arête tranchante (66) et les surfaces (86, 88) de la couche de matière dure (68) connexes à l'arête tranchante (66) reposant contre l'évidement.

3. Élément de traitement de récoltes et/ou de transport selon l'une quelconque des revendications 1 ou 2, une surface de délimitation (72, 74) étant formée en ligne droite ou de façon profilée entre le corps (82) et la couche de matière dure (68) sur toute sa longueur ou une partie de celle-ci, notamment avec une forme ondulée ou crénelée ou en dents de scie ou en queue d'aronde.

4. Élément de traitement de récoltes et/ou de transport selon la revendication 3, la surface de délimitation (72, 74) s'étendant au moins approximativement radialement par rapport à la direction de rotation du corps (82) et/ou au moins approximativement tangentiellement par rapport à la direction de rotation du corps (82).

5. Élément de traitement de récoltes et/ou de transport selon la revendication 3 ou 4, la direction du profilage étant orientée dans la direction de rotation ou dans le plan axial ou diagonal.

6. Élément de traitement de récoltes et/ou de transport selon l'une quelconque des revendications 1 à 5, la couche de matière dure (68) étant structurée à partir de plusieurs couches (68a à 68e) présentant des propriétés identiques ou différentes.

7. Élément de traitement de récoltes et/ou de transport selon l'une quelconque des revendications 1 à 6, la couche de matière dure (68) étant reliée au corps (82) par forgeage, coulée, frittage ou collage.

8. Élément de traitement de récoltes et/ou de transport selon l'une quelconque des revendications 1 à 7, la couche de matière dure (68) étant structurée en plusieurs sections (68f à 68h) s'étendant transversalement à la direction de rotation et s'imbriquant du côté d'extrémité les unes sous les autres.

9. Ramasseuse-hacheuse (10) équipée d'un élément de traitement de récoltes et/ou de transport selon l'une quelconque des revendications précédentes.
